# EUROPÄISCHE PATENTSCHRIFT

(11) **EP 3 752 344 B1**
(45) Veröffentlichungstag und Bekanntmachung des Hinweises auf die Patenterteilung: **02.04.2025**
(21) Anmeldenummer: 19702928.3
(22) Anmeldetag: 11.02.2019
(51) Int. Cl.: B29C 65/36, B29C 65/46, B29C 35/08, B29C 33/06, B21D 51/44, B65D 17/50, B21D 51/46, B29C 65/78, B29C 65/00, B65D 17/28, B65D 17/347, B29L 31/56, B29K 705/02, B29C 33/40, B29K 705/00

(54) **VERFAHREN ZUM HERSTELLEN EINES DOSENDECKELS AUS EINEM VERBUNDMATERIAL**
METHOD FOR PRODUCING A CAN LID FROM A COMPOUND MATERIAL
PROCÉDÉ DE FABRICATION D'UN COUVERCLE DE CANETTE EN MATÉRIAU COMPOSITE

(30) Priorität: 28.03.2018 EP 18164546
(43) Veröffentlichungstag der Anmeldung: 23.12.2020
(73) Patentinhaber: Top Cap Holding GmbH, 6330 Kufstein (AT)
(72) Erfinder: PIECH, Gregor Anton, 6370 Reith bei Kitzbühel (AT)
(74) Vertreter: Manitz Finsterwald Patent- und Rechtsanwaltspartnerschaft mbB
(86) Internationale Anmeldenummer: PCT/EP2019/053264
(87) Internationale Veröffentlichungsnummer: WO 2019/185225

(56) Entgegenhaltungen:
- DE-A1- 10 117 979
- DE-A1- 10 117 979
- DE-A1- 102015 112 428
- DE-A1- 102015 112 428
- DE-A1- 2 032 928
- DE-A1- 2 032 928
- JP-A- 2002 179 061
- JP-A- 2002 179 061
- JP-A- H05 104 635
- US-A- 4 248 653
- US-A- 4 248 653
- US-A- 4 397 401
- US-A- 4 397 401
- US-A- 4 719 739
- US-A- 4 719 739
- US-A- 5 397 225
- US-A- 5 397 225
- US-A1- 2010 159 061
- US-A1- 2010 159 061

## Beschreibung

Die vorliegende Erfindung betrifft ein Verfahren zum Herstellen eines Dosendeckels aus einem Verbundmaterial umfassend mindestens ein Metallblechteil, insbesondere Aluminium- oder Weißblechteil, und mindestens ein Kunststoffteil, insbesondere aus Polypropylen oder Polyethylenterephthalat.

Dosendeckel für Getränkedosen weisen üblicherweise einen durch eine Schwächungslinie vom übrigen Dosendeckel getrennten Öffnungsabschnitt auf, der über ein daran befestigtes Aufreißorgan aus der Deckelebene herausbewegt werden kann, um die Dose zu öffnen. Der Öffnungsabschnitt kann dabei in die Dose hinein oder nach oben bewegt werden. Es sind auch wiederverschließbare Dosendeckel bekannt, bei welchen ein mit der festen Deckelfläche verbundener und den Öffnungsbereich umgebender Dichtungsrahmen aus Kunststoffmaterial mit dem den Öffnungsbereich umgebenden metallischen Deckelbereich verbunden ist. Mit dem Dichtungsrahmen wirkt eine Verschließeinheit zusammen, die mit dem aufschwenkbaren, metallischen Öffnungsabschnitt des Dosendeckels verbunden ist. Der Dichtungsrahmen und die Verschließeinheit bestehen bevorzugt aus Kunststoff, der Dosendeckel aus Aluminium oder Weißblech. Ähnliche Dosendeckel werden für Lebensmitteldosen eingesetzt. Es ist auch bekannt geworden, dass anstelle der Schwächungslinie ein Mikrospalt zwischen dem Öffnungsabschnitt und dem festen Deckelbereich vorgesehen ist. In diesem Fall ist der Dosendeckel innen mit einer Kunststofffolie laminiert, um den Mikrospalt dichtend zu überdecken. Die Kunststofffolie wird beim Öffnen des Dosendeckels mit aufgerissen, wofür die Kunststofffolie ebenfalls mit einer Schwächungslinie versehen sein kann.

Aus der DE 20 32 928 A1 ist ein Verfahren zum Vorbehandeln von Metallgegenständen bekannt, bei welchem ein Aufreiß- und Verschlussteil aus Propylenpolymer durch induktives Erwärmen mit einem Behälterende aus Metall verbunden wird. Die US 4,397,401 A betrifft einen leicht zu öffnenden Behälterverschluss und ein Verfahren zur Herstellung desselben, wobei die Öffnung des aus Metall bestehenden Behälterdeckels mit einem aus Kunststoff versehenen Kantenschutz versehen ist. Die Verbindung des Kantenschutzes mit dem Deckelteil erfolgt durch Heißkleben unter Verwendung von Hochfrequenzinduktionserhitzung. Die JP 2002 179061 A betrifft einen laminierten Deckel aus Metall und Kunststoff, wobei das Kunststoffmaterial und das Deckelmaterial unter Induktionserwärmung zwischen zwei Laminierwalzen durchgeführt und miteinander verbunden werden.

Die JP H05 104635A offenbart das Zusammenfügen einer Polypropylenschicht und eines mehrschichtigen Laminats aus Aluminiumfolie und Polypropylenfilm in einem Formwerkzeug.

Der Erfindung liegt die Aufgabe zugrunde, ein Verfahren zum Herstellen eines solchen Dosendeckels anzugeben, welches möglichst einfach und kostengünstig ist.

Diese Aufgabe wird durch ein Verfahren mit den Merkmalen des Anspruchs 1 gelöst und insbesondere dadurch, dass das Kunststoffteil und das Metallblechteil durch Aneinanderpressen und induktives Erwärmen zusammengefügt werden.

Durch das induktive Erwärmen wird das Kunststoffteil angeschmolzen und dadurch mit dem Metallblechteil stoffschlüssig verbunden. Die Induktionsheizung hat dabei den Vorteil, dass nur das Metallblechteil direkt erwärmt wird, da durch die Induktion nur in dem Metallblechteil Wirbelströme erzeugt werden können. Das Kunststoffteil wird dagegen indirekt durch das Metallteil erwärmt, wodurch insbesondere das dem Metallblechteil berührende Seite des Kunststoffteils angeschmolzen wird.

Bevorzugt wird das Metallblechteil und/oder das Kunststoffteil vor dem Fügen mit einem Haftvermittler beschichtet. Die Stabilität der Fügeverbindung kann dadurch erhöht werden.

Der Haftvermittler enthält bevorzugt denselben Kunststoff wie das mit dem Metallblechteil zu verbindende Kunststoffteil. Hierdurch ergibt sich eine besonders gute Haftung und damit eine besonders feste Fügeverbindung.

Erfindungsgemäß wird ein fertig ausgeformtes Dosendeckelelement aus Metallblech mit einer eine angepasste Form aufweisenden Kunststofffolie, insbesondere einer thermogeformten Kunststofffolie, zusammengefügt. Auch hierdurch wird eine besonders feste Fügeverbindung erreicht. Zudem kann die Fügeverbindung mit relativ wenig Energieaufwand hergestellt werden, da eine anpassende Verformung des Kunststoffteils beim Fügen nicht erforderlich ist.

Zur Herstellung eines wiederverschließbaren Dosendeckels wird erfindungsgemäß das Dosendeckelelement auf seiner einen Seite mit einer Kunststofffolie und auf seiner anderen Seite mit einem den Öffnungsbereich des Dosendeckels abdeckenden Verschlusselement bestehend aus einem Dichtungsrahmen und einer aufschwenkbaren Verschließeinheit zusammengefügt, wobei das Verschlusselement aus insbesondere spritzgegossenem Kunststoff, insbesondere Polypropylen oder Polyethylenterephthalat besteht. Dabei erfolgen beide Fügevorgänge in einem Arbeitsschritt. Das Fügeverfahren kann dadurch besonders schnell und einfach durchgeführt werden. Zudem wird Energie eingespart, da das Metallblechteil des Dosendeckels nur einmal erwärmt werden muss.

Nach einer bevorzugten Ausgestaltung der Erfindung wird für den Fügevorgang eine Presse verwendet, mit einem Oberwerkzeug und einem Unterwerkzeug sowie einem Hohlleiter zur Zuführung des elektromagnetischen Wechselfeldes in den Bereich des Dosendeckels zu dessen induktiver Erwärmung, wobei das Oberwerkzeug eine zu einer Seite des Dosendeckels und das Unterwerkzeug eine zur anderen Seite des Dosendeckels reziproke Form aufweist. Mit einer solchen Vorrichtung kann eine besonders gute Fügeverbindung hergestellt werden. Über die Presse werden die zu fügenden Teile zusammengepresst, so dass sie in einem innigen Kontakt stehen. Über den Hohlleiter wird das elektromagnetische Wechselfeld in den Bereich des Dosendeckels geleitet und erwärmt das Metallblechteil, dessen Wärme wiederum zum Anschmelzen des das Metallblechteil berührenden Kunststoffs führt.

Besonders bevorzugt weist der Hohlleiter mehrere ring- bzw. spiralförmige Abschnitte auf, die dem Fügebereich des Dosendeckels gegenüberliegen, insbesondere einen ringförmigen Bereich im Randbereich des Dosendeckels sowie einen spiralförmigen Bereich mit zwei, drei oder mehr Windungen im mittleren Deckelbereich. Durch diese Ausgestaltung kann eine vorteilhafte Erwärmung des Metallblechteils erzielt werden, insbesondere im kritischen Randbereich durch den eigenen ringförmigen Bereich des Hohlleiters dort.

Nach einer weiteren vorteilhaften Ausgestaltung der Erfindung besteht das auf Seiten des Hohlleiters befindliche Werkzeug aus formstabilem Material, insbesondere Kunststoff, und das gegenüberliegende Werkzeug aus elastischem Material, insbesondere Elastomermaterial. Durch das formstabile Material auf Seiten des Hohlleiters wird dieser vor auftretenden Kräften sicher geschützt. Das elastische Material auf der gegenüberliegenden Seite ermöglicht andererseits einen Ausgleich von Fertigungstoleranzen, so dass durch diese beim Zusammenpressen der Teile keine zu hohen Kräfte entstehen.

Das formstabile Werkzeug ist bevorzugt der Kunststofffolie zugeordnet. Es kann zudem bevorzugt mit Rippen zum Einbringen einer Schwächungslinie in die Kunststofffolie während des Fügevorgangs versehen sein. Hierdurch kann ein Arbeitsgang bei der Herstellung eines Dosendeckels eingespart werden.

Nach einer ebenfalls bevorzugten Ausgestaltung der Erfindung werden die zu fügenden Teile beim Fügevorgang durch Unterdruck zusammengehalten. Dadurch kann ein passgenaues Fügen gewährleistet werden. Zudem ergibt sich eine vorteilhafte Entlüftung, die den Einschluss von Luftblasen zwischen dem Kunststoffmaterial und dem Metallblechteil verhindert. Bei Dosendeckeln mit Mikrospalt zwischen dem Öffnungsabschnitt und dem festen Deckelbereich kann die Entlüftung auf beiden Seiten des Deckels wirken.

Insbesondere zur Herstellung von Dosendeckeln ohne Mikrospalt ist es vorteilhaft, mindestens eines der Werkzeuge mit Ausbuchtungen zur Erzeugung von Freiräumen zu versehen, die zur Aufnahme eventuell eingeschlossener Luft ausgebildet sind. Solche Ausbuchtungen können bevorzugt in solchen Bereichen vorgesehen werden, in denen eingeschlossene Luftblasen nicht stören, beispielsweise im mittleren Deckelbereich mit ausreichendem Abstand zum Deckelrand und zum Öffnungsbereich.

Nach einer weiteren Ausgestaltung der Erfindung wird ein Rundschalttisch verwendet, um die einzelnen Bestandteile des Dosendeckels für den Fügevorgang zusammenzubringen. Damit kann eine vorteilhafte Bestückung einer beim Fügen verwendeten Presse erzielt werden.

Nach einer bevorzugten Weiterbildung weist der Rundschalttisch eine Unterdruckversorgung für mindestens eine Beschickungsstation auf, wobei die Unterdruckversorgung der einzelnen Stationen über Ventile erfolgt, die durch einen Rundverteiler betätigt werden. Dies ist besonders vorteilhaft hinsichtlich der Verteilung des Unterdrucks.

Ein Ausführungsbeispiel der Erfindung ist in der Zeichnung dargestellt und wird nachfolgend beschrieben. Es zeigen, jeweils in schematischer Darstellung,
- Fig. 1: eine geschnittene, perspektivische Ansicht einer Presse zur Verwendung in einem erfindungsgemäßen Verfahren,
- Fig. 2: eine geschnittene Seitenansicht eines Teils der erfindungsgemäßen Presse,
- Fig. 3: eine perspektivische Ansicht eines in der Vorrichtung von Fig. 1 zu verwendenden Induktors,
- Fig. 4: eine Seitenansicht des Induktors von Fig. 3,
- Fig. 5: eine Draufsicht auf den Induktor von Fig. 3,
- Fig. 6: eine Draufsicht auf einen Dosendeckel,
- Fig. 7: einen Querschnitt durch den Dosendeckel von Fig. 6,
- Fig. 8: das Detail B von Fig. 7,
- Fig. 9: das Detail C von Fig. 7, und
- Fig. 10: das Detail von D von Fig. 7.

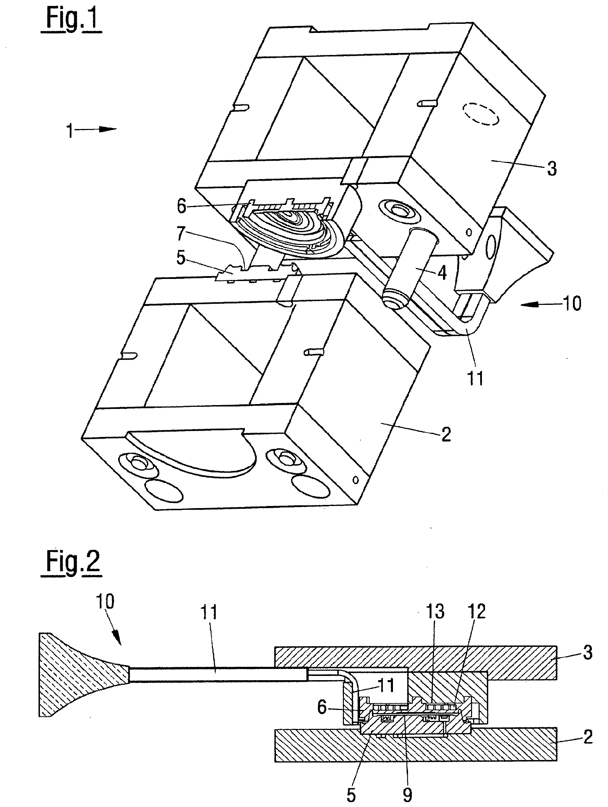

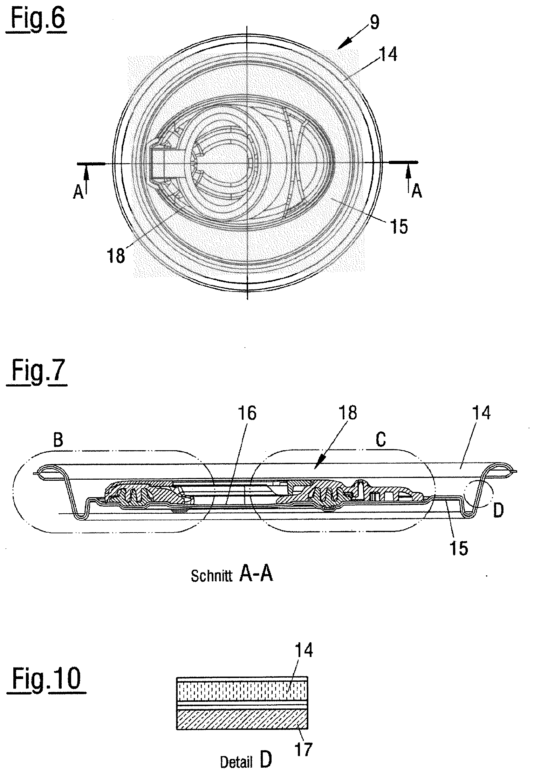

Die in Fig. 1 dargestellte Presse 1 umfasst ein Untergestell 2 und ein demgegenüber bewegliches oberes Pressenteil 3 sowie Führungszylinder 4 zur Führung des oberen Pressenteils 3 beim Öffnen und Schließen der Presse. Auf der Oberseite des Untergestells 2 ist ein Unterwerkzeug 5 und auf der Unterseite des oberen Pressenteils 3 ein Oberwerkzeug 6 vorgesehen. Das Unterwerkzeug 5 besteht aus einem Elastomermaterial und weist eine Kavität 7 zur Aufnahme eines Verschlusselements 18 (siehe Fig. 6) eines Dosendeckels 9 auf. Im Übrigen ist das Unterwerkzeug 5 der Form der Oberseite des Dosendeckels 9 nachgebildet. Das Oberwerkzeug 6 besteht aus einem formstabilen Kunststoff und ist der Unterseite des Dosendeckels 9 nachgebildet.

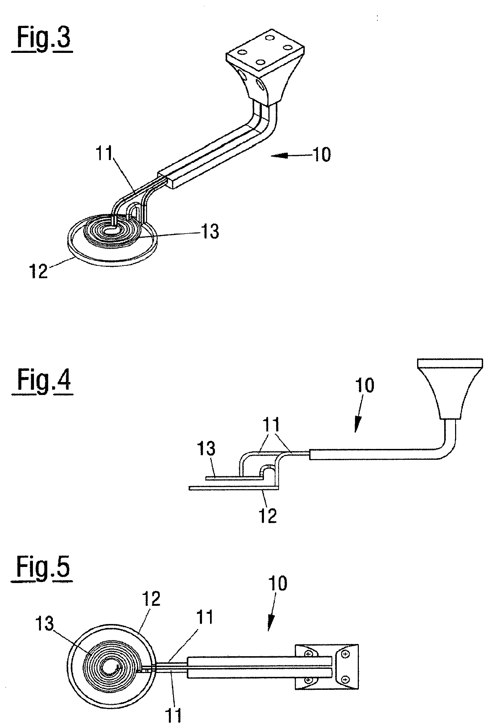

Ein Induktor 10 ist im Bereich der Presse angeordnet. Hohlleiter 11 zur Zuführung eines elektromagnetischen Wechselfeldes sind ausgehend vom Induktor 10 in den Bereich des Oberwerkzeugs 6 geführt. Wie man insbesondere in den Fig. 3 bis 5 sieht, sind die insbesondere aus Kupfer bestehenden Hohlleiter zu einem äußeren Ring 12 und einer innerhalb des Rings angeordneten Spirale 13 mit mehreren Windungen geformt. Wie man insbesondere in Fig. 2 sehen kann, sind der äußere Ring 12 und die Spirale 13 oberhalb des Oberwerkzeugs 6 angeordnet. Sie liegen dadurch der zu fügenden Fläche des Dosendeckels 9 gegenüber. Die Kupferhohlleiter 11 sind insbesondere wassergekühlt.

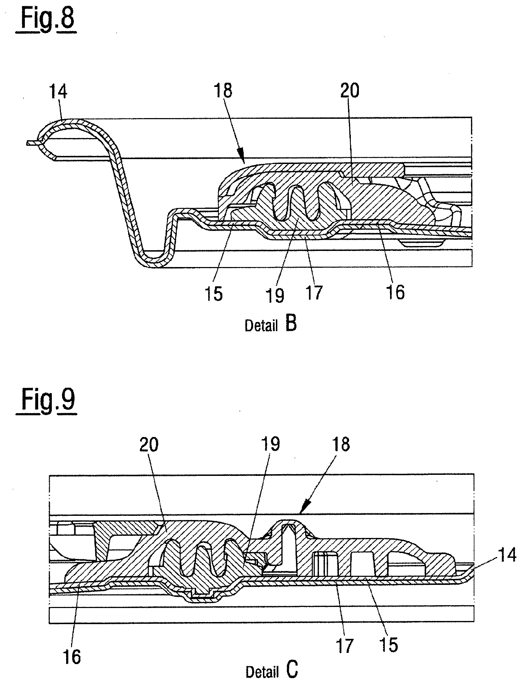

Der in den Fig. 6 bis 9 dargestellte Dosendeckel 9 umfasst einen Grundkörper 14 aus einem Metallblech, insbesondere Aluminium oder Weißblech. Der Grundkörper 14 umfasst einen festen metallischen Deckelbereich 15 sowie einen hochschwenkbaren Öffnungsabschnitt 16 zur Freigabe eines Öffnungsbereichs 8. Wie man insbesondere in den Fig. 8 und 9 sieht, ist die Unterseite des Dosendeckels 9 mit einer Kunststofffolie 17 laminiert. Auf der Oberseite des Dosendeckels 9 ist dagegen ein Verschlusselement 18 angeordnet, welches aus einem Dichtrahmen 19 und einer Verschließeinheit 20 besteht. Der Dichtrahmen 19 ist mit dem festen Deckelbereich 15 verbunden, und die Verschließeinheit 20 mit dem hochschwenkbaren Öffnungsabschnitt 16.

Zur Herstellung des in den Fig. 6 bis 9 dargestellten Dosendeckels 9 kann das erfindungsgemäße Verfahren unter Verwendung der in den Fig. 1 bis 5 dargestellten Vorrichtung eingesetzt werden. Hierfür wird das insbesondere einstückig in einem Tiefziehverfahren hergestellte Verschlusselement 18 in das Unterwerkzeug 5 derart eingelegt, dass die dem Dosendeckel 9 zugewandte Seite nach oben zeigt. Auf das Verschlusselement 18 wird der Grundkörper 14 gelegt, der zuvor auf seiner Unterseite mit der Kunststofffolie 17 bestückt wurde. Sodann wird die Presse 1 geschlossen und die Induktionsheizung 10 eingeschaltet.

Durch die zugeführte Energie wird der metallische Grundkörper 14 erwärmt, indem in diesem elektromagnetische Wirbelströme erzeugt werden. Der erwärmte Grundkörper 14 erwärmt seinerseits die Kunststofffolie 17 und das Verschlusselement 18, die dadurch angeschmolzen werden. Dadurch ergibt sich eine Kunststoffschweißverbindung zwischen dem metallischen Grundkörper 14 und der Kunststofffolie 17 einerseits und dem Verschlusselement 18 andererseits, wobei zur Verbesserung der Kunststoffschweißverbindung bevorzugt ein Haftvermittler verwendet wird. Der Haftvermittler kann dabei denselben Kunststoff enthalten, der für die Kunststofffolie 17 bzw. das Verschlusselement 18 verwendet wird. Hierbei kann es sich insbesondere um Polypropylen oder um Polyethylenterephthalat handeln.

Das Oberwerkzeug 6 kann zudem hier nicht erkennbare Rippen aufweisen, durch welche beim Press- und Fügevorgang eine Schwächungslinie in die Kunststofffolie 17 eingebracht wird. Zudem können in dem Oberwerkzeug 6 Ausbuchtungen zur Erzeugung von Freiräumen zwischen Kunststofffolie 17 und metallischem Grundkörper 14 vorgesehen sein. Hierdurch kann eingeschlossene Luft in vorbestimmten Bereichen des Dosendeckels 9 gesammelt werden, insbesondere in Bereichen, in denen Luftblasen nicht stören, wie beispielsweise im Bereich zwischen dem Rand des Dosendeckels und dessen Öffnungsbereich 8. Zusätzlich oder alternativ kann die Presse 1 mit einer Unterdruckversorgung versehen sein, die einerseits die zu fügenden Teile zusammenhält und andererseits ein Einschließen von Luft zumindest weitgehend verhindern kann. Bei Dosendeckeln mit einem Mikrospalt zwischen dem festen Deckelbereich 15 und dem aufschwenkbaren Öffnungsabschnitt 16 gilt dies für beide Seiten des Dosendeckels.

Zur Bestückung der Presse 1 kann ein Rundschalttisch vorgesehen sein, der mehrere Stationen zum Zusammenstellen der Einzelteile des Dosendeckels aufweist. Anstelle eines Rundschalttisches kann aber auch eine Linearzuführung für die Presse 1 vorgesehen sein.

Nach erfolgter Verschweißung der Kunststofffolie 17 und des Verschlusselements 18 mit dem metallischen Grundkörper 14 wird die Presse geöffnet und der fertige Dosendeckel 9 entnommen.

### Bezugszeichenliste

- 1: Presse
- 2: Untergestell
- 3: oberes Pressenteil
- 4: Führungszylinder
- 5: Unterwerkzeug
- 6: Oberwerkzeug
- 7: Kavität
- 8: Öffnungsbereich
- 9: Dosendeckel
- 10: Induktor
- 11: Hohlleiter
- 12: äußerer Ring
- 13: Spirale
- 14: Grundkörper
- 15: fester Deckelbereich
- 16: Öffnungsabschnitt
- 17: Kunststofffolie
- 18: Verschlusselement
- 19: Dichtrahmen
- 20: Verschließeinheit

## Patentansprüche

1. Verfahren zum Herstellen eines Dosendeckels (9) aus einem Verbundmaterial umfassend mindestens ein Metallblechteil (14), insbesondere Aluminium- oder Weißblechteil, und mindestens ein Kunststoffteil (17, 18), insbesondere aus Polypropylen oder Polyethylenterephthalat,
wobei das Kunststoffteil (17, 18) und das Metallblechteil (14) durch Aneinanderpressen und induktives Erwärmen zusammengefügt werden, **dadurch gekennzeichnet, dass**
ein fertig ausgeformtes Dosendeckelteil (14) aus Metallblech mit einer eine angepasste Form aufweisenden Kunststofffolie (17) zusammengefügt wird, wobei das Dosendeckelteil (14) auf seiner einen Seite mit der Kunststofffolie (17) und auf seiner anderen Seite mit einem einen Öffnungsbereich (8) des Dosendeckels (9) überdeckenden Verschlusselement (18) aus Kunststoff zusammengefügt wird, und wobei beide Fügevorgänge in einem Arbeitsschritt erfolgen.

2. Verfahren nach Anspruch 1,
**dadurch gekennzeichnet, dass**
das Metallblechteil (14) und/oder das Kunststoffteil (17, 18) vor dem Fügen mit einem Haftvermittler beschichtet werden.

3. Verfahren nach Anspruch 2,
**dadurch gekennzeichnet, dass**
der Haftvermittler denselben Kunststoff enthält wie das mit dem Metallblechteil (14) zu verbindende Kunststoffteil (17, 18).

4. Verfahren nach einem der vorhergehenden Ansprüche,
**dadurch gekennzeichnet, dass**
das Dosendeckelteil (14) mit einer thermogeformten Kunststofffolie zusammengefügt wird.

5. Verfahren nach einem der vorhergehenden Ansprüche,
**dadurch gekennzeichnet, dass**
das Dosendeckelteil (14) mit einem Verschlusselement (18) aus spritzgegossenem Kunststoff, insbesondere Polypropylen oder Polyethylenterephthalat, zusammengefügt wird.

6. Verfahren nach einem der vorhergehenden Ansprüche,
**dadurch gekennzeichnet, dass**
für den Fügevorgang eine Presse (1) verwendet wird, mit einem Oberwerkzeug (6) und einem Unterwerkzeug (5) sowie einem Hohlleiter (11) zur Zuführung eines elektromagnetischen Wechselfeldes in den Bereich des Dosendeckels (9) zu dessen induktiver Erwärmung, wobei das Oberwerkzeug (6) eine zu einer Seite des Dosendeckels (9) und das Unterwerkzeug eine zur anderen Seite des Dosendeckels (9) reziproke Form aufweist.

7. Verfahren nach Anspruch 6,
**dadurch gekennzeichnet, dass**
der Hohlleiter (11) einen Abschnitt umfasst, der dem Aufnahmebereich des zu fügenden Dosendeckels (9) gegenüberliegt, insbesondere einen ringförmigen Bereich (12) im Randbereich des Dosendeckels (9) sowie einen innerhalb des ringförmigen Bereichs (12) gelegenen spiralförmigen Bereich (13) mit zwei, drei oder mehr Windungen im mittleren Bereich des Dosendeckels (9).

8. Verfahren nach Anspruch 7,
**dadurch gekennzeichnet, dass**
das auf Seiten des Hohlleiters (11) befindliche Werkzeug (6) aus formstabilem Material, insbesondere Kunststoff, besteht, und das gegenüberliegende Werkzeug (5) aus elastischem Material, insbesondere Elastomermaterial.

9. Verfahren nach Anspruch 8,
**dadurch gekennzeichnet, dass**
das formstabile Werkzeug (6) der Kunststofffolie (17) zugeordnet ist.

10. Verfahren nach Anspruch 9,
**dadurch gekennzeichnet, dass**
das der Kunststofffolie (17) zugeordnete Werkzeug (6) Rippen zum Einbringen einer Schwächungslinie in die Kunststofffolie (17) während des Fügevorgangs aufweist.

11. Verfahren nach einem der vorhergehenden Ansprüche,
**dadurch gekennzeichnet, dass**
mindestens eines der Werkzeuge (5, 6) Ausbuchtungen zur Erzeugung von Freiräumen zur Aufnahme eventuell eingeschlossener Luft aufweist.

12. Verfahren nach einem der vorhergehenden Ansprüche,
**dadurch gekennzeichnet, dass**
die zu fügenden Teile (14, 17, 18) beim Fügevorgang durch Unterdruck zusammengehalten werden.

13. Verfahren nach einem der vorhergehenden Ansprüche,
**dadurch gekennzeichnet, dass**
ein Rundschalttisch verwendet wird, um die einzelnen Bestandteile (14, 17, 18) des Dosendeckels (9) für den Fügevorgang zusammenzubringen.

14. Verfahren nach Anspruch 13,
**dadurch gekennzeichnet, dass**
der Rundschalttisch eine Unterdruckversorgung für mindestens eine Beschickungsstation aufweist, wobei die Unterdruckversorgung der einzelnen Stationen über Ventile ein- und ausschaltbar ist, die durch einen Rundverteiler mit Unterdruck versorgt werden.

## Claims

1. A method of manufacturing a can lid (9) composed of a composite material comprising at least one sheet metal part (14), in particular an aluminum part or a tin plate part, and at least one plastic part (17, 18), in particular composed of polypropylene or polyethylene terephthalate,
wherein the plastic part (17, 18) and the sheet metal part (14) are joined together by pressing together and by inductive heating,
**characterized in that**
a fully formed can lid part (14) composed of sheet metal is joined together with a plastic film (17) having a matched shape,
wherein the can lid part (14) is joined together with the plastic film (17) on its one side and with a closure element (18) on its other side that covers an opening region (8) of the can lid (9) and that is composed of plastic, and wherein both joining processes take place in one workstep.

2. A method according to claim 1,
**characterized in that**
the sheet metal part (14) and/or the plastic part (17, 18) is/are coated with a bonding agent before the joining.

3. A method according to claim 2,
**characterized in that**
the bonding agent includes the same plastic as the plastic part (17, 18) to be connected to the sheet metal part (14).

4. A method according to any one of the preceding claims,
**characterized in that**
the can lid part (14) is joined together with a thermally shaped plastic film.

5. A method according to any one of the preceding claims,
**characterized in that**
the can lid part (14) is joined together with a closure element (18) composed of injection molded plastic, in particular polypropylene or polyethylene terephthalate.

6. A method according to any one of the preceding claims,
**characterized in that**
a press (1) is used for the joining process having a top tool (6) and a bottom tool (5) as well as a hollow conductor (11) for supplying an electromagnetic alternating field into the region of the can lid (9) for its inductive heating, with the top tool (6) having a shape reciprocal to one side of the can lid (9) and the bottom tool having a shape reciprocal to the other side of the can lid (9).

7. A method according to claim 6,
**characterized in that**
the hollow conductor (11) comprises a section which is disposed opposite the reception region of the can lid (9) to be joined, in particular a ring-shaped region (12) in the marginal region of the can lid (9) and a spiral region (13) disposed within the ring-shaped region (12) and having two, three, or more windings in the middle region of the can lid (9).

8. A method according to claim 7,
**characterized in that**
the tool (6) located at the side of the hollow conductor (11) comprises shape-stable material, in particular plastic, and the oppositely disposed tool (5) comprises elastic material, in particular elastomeric material.

9. A method according to claim 8,
**characterized in that**
the shape-stable tool (6) is associated with the plastic film (17).

10. A method according to claim 9,
**characterized in that**
the tool (6) associated with the plastic film (17) has ribs for introducing a weakening line into the plastic film (17) during the joining process.

11. A method according to any one of the preceding claims,
**characterized in that** at least one of the tools (5, 6) has indentations for producing free spaces for receiving possibly enclosed air.

12. A method according to any one of the preceding claims,
**characterized in that**
the parts (14, 17, 18) to be joined are held together by vacuum during the joining process.

13. A method according to any one of the preceding claims,
**characterized in that**
a rotary indexing table is used to join together the individual components (14, 17, 18) of the can lid (9) for the joining process.

14. A method according to claim 13,
**characterized in that**
the rotary indexing table has a vacuum supply for at least one charging station, with the vacuum supply of the individual stations being able to be switched on and off via valves which are supplied with vacuum by a round distributor.

## Revendications

1. Procédé de fabrication d'un couvercle de boîte (9) à partir d'un matériau composite, comprenant au moins une pièce en tôle métallique (14), en particulier une pièce en aluminium ou en fer blanc, et au moins une pièce en matière plastique (17, 18), en particulier en polypropylène ou en polyéthylène téréphtalate,
la pièce en matière plastique (17, 18) et la pièce en tôle métallique (14) étant assemblées par pressage l'une contre l'autre et par chauffage par induction,
**caractérisé en ce que**
une pièce de couvercle de boîte (14) en tôle métallique, dont le formage est terminé, est assemblée avec un film en matière plastique (17) présentant une forme adaptée, sachant que la pièce de couvercle de boîte (14) est assemblée, sur l'une de ses faces, avec le film en matière plastique (17) et, sur son autre face, avec un élément de fermeture (18) en matière plastique, recouvrant une zone d'ouverture (8) du couvercle de boîte (9), et que les deux opérations d'assemblage s'effectuent en une seule étape de travail.

2. Procédé selon la revendication 1,
**caractérisé en ce que**
la pièce en tôle métallique (14) et/ou la pièce en matière plastique (17, 18) sont revêtues d'un agent adhésif avant l'assemblage.

3. Procédé selon la revendication 2,
**caractérisé en ce que**
l'agent adhésif comprend la même matière plastique que la pièce en matière plastique (17, 18) à assembler avec la pièce en tôle métallique (14).

4. Procédé selon l'une des revendications précédentes,
**caractérisé en ce que**
la pièce de couvercle de boîte (14) est assemblée avec un film en matière plastique thermoformé.

5. Procédé selon l'une des revendications précédentes,
**caractérisé en ce que**
la pièce de couvercle de boîte (14) est assemblée avec un élément de fermeture (18) en matière plastique moulée par injection, en particulier en polypropylène ou en polyéthylène téréphtalate.

6. Procédé selon l'une des revendications précédentes,
**caractérisé en ce que**
l'opération d'assemblage utilise une presse (1) comprenant un outil supérieur (6) et un outil inférieur (5) ainsi qu'un guide d'ondes (11) pour amener un champ électromagnétique alternatif dans la zone du couvercle de boîte (9) pour le chauffer par induction, l'outil supérieur (6) présentant une forme réciproque à une face du couvercle de boîte (9) et l'outil inférieur présentant une forme réciproque à l'autre face du couvercle de boîte (9).

7. Procédé selon la revendication 6,
**caractérisé en ce que**
le guide d'ondes (11) comprend une partie opposée à la zone de réception du couvercle de boîte (9) à assembler, en particulier une zone annulaire (12) située dans la zone du bord du couvercle de boîte (9) ainsi qu'une zone hélicoïdale (13) située à l'intérieur de la zone annulaire (12) et présentant deux ou trois spires ou plus situées dans la zone centrale du couvercle de boîte (9).

8. Procédé selon la revendication 7,
**caractérisé en ce que**
l'outil (6) situé du côté du guide d'ondes (11) est constitué en un matériau indéformable, en particulier en matière plastique, et l'outil (5) situé à l'opposé est constitué en un matériau élastique, en particulier en un matériau élastomère.

9. Procédé selon la revendication 8,
**caractérisé en ce que**
l'outil (6) indéformable est associé au film en matière plastique (17).

10. Procédé selon la revendication 9,
**caractérisé en ce que**
l'outil (6) associé au film en matière plastique (17) présente des nervures destinées à introduire une ligne d'affaiblissement dans le film en matière plastique (17) pendant l'opération d'assemblage.

11. Procédé selon l'une des revendications précédentes,
**caractérisé en ce que**
l'un au moins des outils (5, 6) présente des renflements destinés à créer des espaces libres pour recevoir l'air éventuellement emprisonné.

12. Procédé selon l'une des revendications précédentes,
**caractérisé en ce que**
lors de l'opération d'assemblage, les pièces à assembler (14, 17, 18) sont maintenues ensemble par dépression.

13. Procédé selon l'une des revendications précédentes,
**caractérisé en ce que**
une table à transfert circulaire est utilisée pour rapprocher les composants individuels (14, 17, 18) du couvercle de boîte (9) pour l'opération d'assemblage.

14. Procédé selon la revendication 13,
**caractérisé en ce que**
la table à transfert circulaire présente une alimentation en dépression pour au moins un poste de chargement, l'alimentation en dépression des postes individuels pouvant être activée et désactivée par des vannes qui sont alimentées en dépression par un distributeur circulaire.
